# EUROPEAN PATENT SPECIFICATION

(11) **EP 2 525 109 B1**
(45) Date of publication and mention of the grant of the patent: **01.05.2019**
(21) Application number: 12167239.8
(22) Date of filing: 09.05.2012
(51) Int. Cl.: F16C 25/06, F16H 57/037

(54) **Device and method for a bearing**
Vorrichtung und Verfahren für ein Lager
Dispositif et procédé pour roulement

(30) Priority: 18.05.2011 SE 1150453
(43) Date of publication of application: 21.11.2012
(73) Proprietor: Scania CV AB, 151 87 Södertälje (SE)
(72) Inventor: Strömbom, Vidar, 14464 Rönninge (SE)
(74) Representative: Scania CV AB

(56) References cited:
- CH-A- 135 283
- DE-A1-102005 027 082
- DE-U1- 8 702 116
- GB-A- 990 552
- US-A- 3 915 523
- US-A1- 2003 152 303

## Description

### TECHNICAL FIELD

The invention relates to a device and a method for preloading of bearings, particularly the bearings which support the pinion in a vehicle's central gear. The invention also relates to a central gear and a motor vehicle.

### BACKGROUND

To drive the wheels of a motor vehicle, power has to be conveyed from the engine to the wheels. The engine has close to it the gearbox in which the engine's speed is adapted to the prevailing running situation. In heavy vehicles in particular, the power passes from the gearbox to a propeller shaft which has at its rear end a propeller shaft driver which is also fastened in the pinion shaft of a central gear. From the pinion the power reaches the wheels via a crownwheel and a differential.

For the pinion to withstand the stresses to which it is subject, especially when fitted in a heavy utility vehicle, its bearings are preloaded. A common way of achieving this preloading is by placing washers, so-called shims, between the bearings in the bearing housing. However, this method is time-consuming in that the preloading force can only be verified after the pinion has been fitted. If the preloading force is incorrect, i.e. if the wrong number of shims have been used, the pinion bearing and its housing have to be removed to allow the preloading to be adjusted. This takes a great deal of time and in today's vehicle manufacturing it is very important that assembly work can be done quickly and any problems can be rectified as quickly as possible. Repairs and servicing may also entail having to remove the central gear and adjust the preloading again.

US 5 727 886 refers to how a bearing is fitted on a wheel driver. A nut is screwed onto the shaft to lock the position of the bearing. Two thin-walled parts with bulges, one on the nut and one on the end of the wheel driver, lock the parts together by shape. The object of this configuration is to make the wheel driver easier to seal.

US 5 560 687 refers to how to use a nut to create desired preloading during the fitting of wheels. The nut is then secured with a locking element, e.g. a screw or a pin. The disadvantage of this arrangement is that the preloading cannot be adjusted gradually but only according to the steps imposed by the holes for the screw/pin. Nor is the solution referred to in US 5 560 687 suitable for a pinion shaft where the propeller shaft driver is behind the locknut and inter alia hinders access for insertion of a screw or pin. GB 990 552 discloses a device for preloading a bearing arrangement for a pinion shaft and a method for preloading such a bearing arrangement according to the preamble of claims 1 and 4.

Prior art thus provides no information about how to achieve an exact and time-efficient device and method for preloading a pinion bearing.

### OBJECT OF THE INVENTION

An object of the invention is to propose a device which enables exact and time-efficient preloading of a pinion bearing. Above all, the invention aims to provide a device and a method for preloading the pinion bearing which not only makes assembling the central gear quicker but also makes post-adjustment of the central gear easier and facilitates repairs and servicing.

### SUMMARY OF THE INVENTION

These objects are achieved with a device, a method, a central gear and a motor vehicle according to the independent claims. Preferred embodiments of the invention are described in the dependent claims.

The invention solves the problems of the state of the art by a device for preloading a bearing configuration for a pinion shaft, which shaft has gear teeth at its one end and can accommodate a propeller shaft driver at its other end, comprising a bearing configuration with a bearing housing and at least one bearing which supports the shaft and a preloading nut which has a collar and which is screwed onto the shaft. The collar is pressed against, and thereby locked by shape to, the shaft. This means that fitting can be done quickly with no need for shims to ensure correct preloading.

The propeller shaft driver is locked on, for joint rotation with, the pinion shaft by a keyed fastening. It is also conceivable to use other forms of fastening which lock the propeller shaft driver by shape to, for joint rotation with, the pinion shaft.

According to the invention, it is the propeller shaft driver which presses the collar of the preloading nut against the shaft. This is achieved by the propeller shaft driver being provided with an internal cone at the end which faces towards the preloading nut. Fitting causes the collar to extend in under the cone in the propeller shaft driver, making it possible for the propeller shaft driver to press the collar against the shaft when it is fitted on the shaft. No separate operation is then required to lock the preloading nut to the shaft, since this is achieved in the actual step of fitting the propeller shaft driver.

The bearing configuration comprising the bearing housing and bearings is thus preloaded after it has been fitted. Adjustment of preloading is done by means of the preloading nut irrespective of the composition of the bearing configuration.

It is also advantageous that the preloading nut is locked relative to the pinion shaft in the operation of fitting the propeller shaft driver, since a smaller number of operations leads to more efficient assembly of the gear.

The locking to the shaft by shape is achieved by the preloading nut's collar extending in over the end portion of the keyed fastening which connects the pinion shaft to the propeller shaft driver. The locking by shape is thus in substantially the circumferential direction of the shaft. The collar may also extend over parts both of the keyed fastening and of the shaft threads. An advantage of having the collar extending also over parts of the shaft threads is in reducing axial play in the thread between the preloading nut and the shaft. Axial means here in the direction of the pinion shaft. As the preloading force and the force from the driver counteract one another across the preloading nut, play may occur between the threads. If the preloading nut is then pressed, via the collar, against the thread on the shaft, the result is locking by shape also in the axial direction, since the main direction of the threads is transverse to the direction of the shaft, thereby reducing the problem of play in the thread.

As fitting causes the preloading nut to be locked to the pinion shaft, the propeller shaft driver can be removed, e.g. for replacement of the sealing ring, without altering the preloading of the bearing. This results in time gains during servicing and repairs.

According to the invention, the bearing configuration is preassembled to form a unit, thereby further reducing the time for final assembly of the gear. A prefitted bearing configuration also means that it need not be removed to adjust the preloading, thereby facilitating both manufacture of the gear and repairs and servicing.

The problems of the state of the art are also solved by a method according to the invention. First, a bearing housing and at least one bearing are mutually assembled to form a bearing configuration which is fitted on the pinion shaft. A preloading nut is then placed on the pinion shaft and the bearing is preloaded to correct force via cooperating threads on the nut and the pinion shaft. The preloading nut is equipped with a collar at its end which faces away from the bearing configuration. The collar is pressed against, and thereby locked by shape to, the shaft.

According to the invention, it is the propeller shaft driver which presses the collar against the shaft as a result of being provided with an internal cone at the end which faces towards the preloading nut. The collar then extends in under the propeller shaft driver and is thus pressed against the shaft.

### LIST OF DRAWINGS

Figure 1 is a schematic diagram of a motor vehicle according to the invention.
Figure 2 is a schematic diagram of a final gear.
Figure 3 is a schematic section through a supported pinion shaft in which the left half depicts prior art and the right half the version according to the invention.
Figure 4 depicts a detail of the device in Figure 3.
Figure 5 depicts schematically a detail of an alternative embodiment of the preloading nut.
Figure 6 depicts schematically an alternative embodiment of the invention.
Figure 7 depicts schematically the pinion shaft and the preloading nut with collar according to the embodiment of the invention depicted in Figure 4.
Figure 8 depicts schematically the pinion shaft and the preloading nut with collar according to the other embodiment of the invention depicted in Figure 5.
Figure 9 is a schematic plan view of the preloading nut.

### DETAILED DESCRIPTION OF THE INVENTION

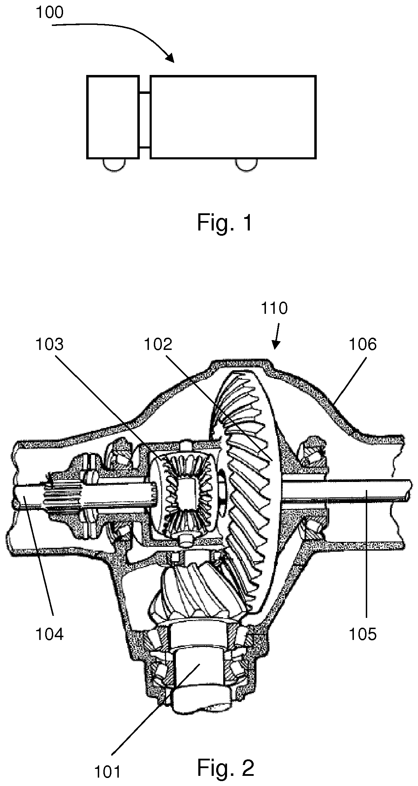

Figure 1 depicts schematically a motor vehicle 100, preferably a heavy utility vehicle such as a truck or bus, with a device according to the invention. The vehicle is propelled by an engine from which the power passes through a gearbox which adapts the engine's speed to the prevailing running situation. From the gearbox, the power passes via a propeller shaft to wheels (depicted but not numbered in Figure 1) via a central gear 110. Figure 2 is a schematic diagram of a central gear 110 which is situated in a gear housing 106. A propeller shaft driver 3 situated at the end of the propeller shaft which points towards the central gear is fastened in the central gear's pinion 101. By tooth engagement the pinion is in power-transmitting communication with a crownwheel 102 via which the power passes through a differential 103 to the wheelshafts 104, 105 and finally to the vehicle's powered wheels.

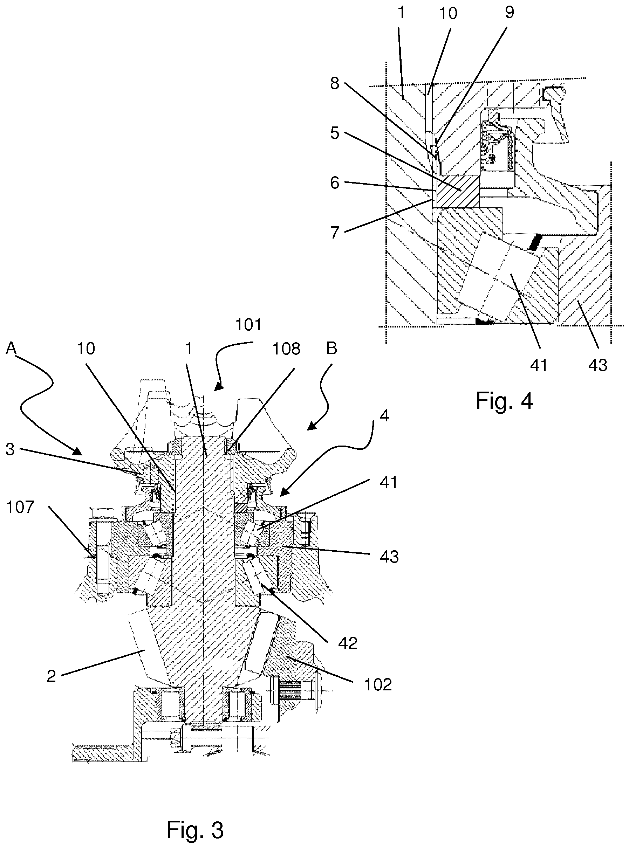

Figure 3 is a schematic section through the central gear's pinion 101. The left side (A) of the diagram depicts a bearing of the pinion according to the state of the art, using shims 107 to preload the bearing, and the right side (B) of the diagram depicts a bearing of the pinion according to the present invention. Figure 4 is an enlargement of the right portion of the pinion in Figure 3.

The pinion 101 comprises a shaft 1 provided at its one end with gear teeth 2 in engagement with corresponding gear teeth on the crownwheel 102. The pinion shaft 1 has at the other end a keyed fastening 10 to accommodate, for joint rotation with it, the propeller shaft driver 3. The pinion is supported by a bearing configuration 4 comprising bearings 41, 42 situated in a bearing housing 43 which is screwed to the gear housing 106. In the embodiment according to Figure 3, there are two taper rolling bearings in the bearing housing. In Figure 3 the propeller shaft driver 3 is also provided with an internal cone 9 at the end which faces towards the preloading nut.

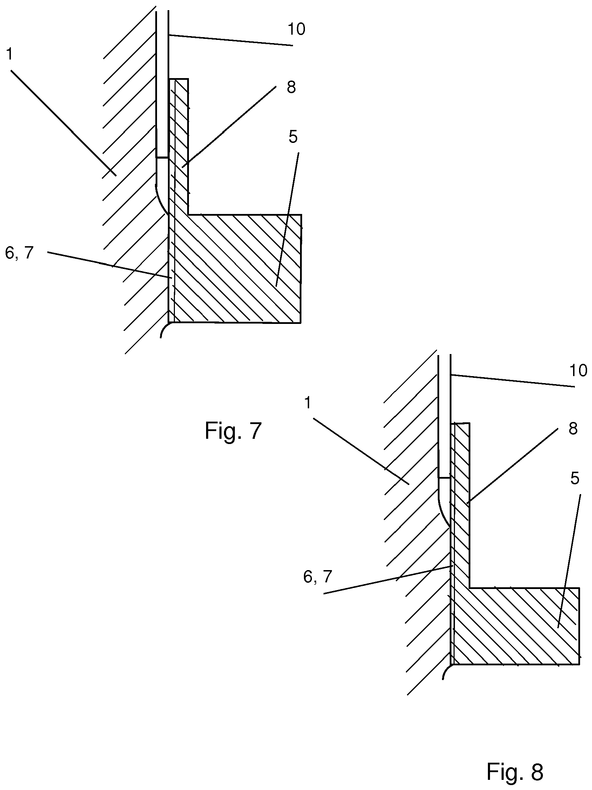

Figure 4 shows how a preloading nut 5 is placed on the pinion shaft 1 to create correct preloading of the bearing configuration 4. The preloading nut has an internal thread 6 which cooperates with an external thread 7 on the pinion shaft. The preloading nut is also equipped with a collar 8. The collar is situated at the preloading nut's radially inner edge at the end of the nut which faces towards the propeller shaft driver 3. According to Figures 4 and 7, the collar 8 extends in over the axially inner end portion of the keyed fastening 10. The collar is pressed against the keyed fastening by cooperation with the propeller shaft driver fitted on the shaft, through the action of the end nut 108. This results in locking by shape in a substantially circumferential direction, which means that the locking of the collar 8 by shape against the keyed fastening 10 renders the preloading nut substantially immovable in the circumferential direction.

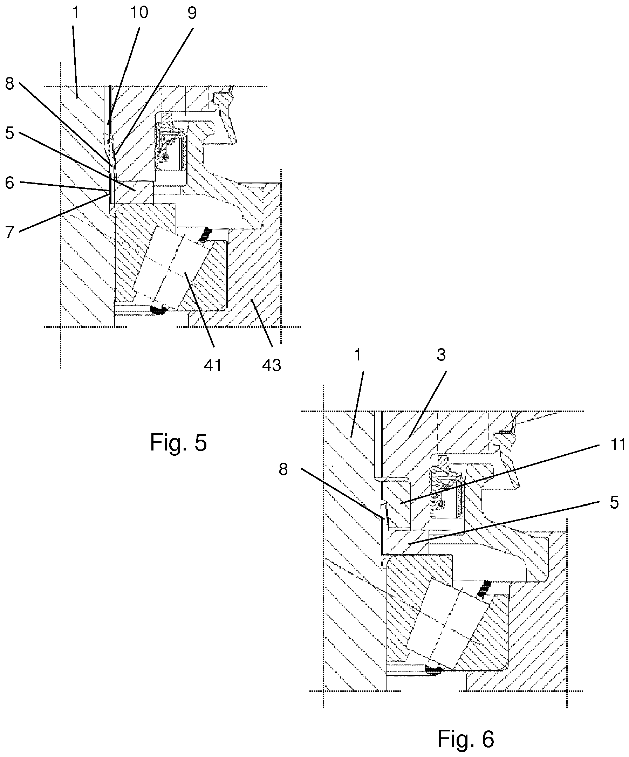

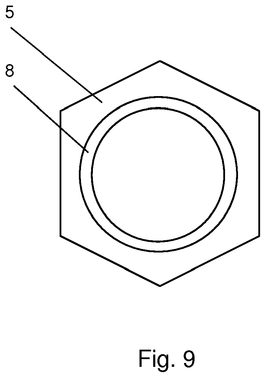

The preloading nut 5 is depicted in detail in Figure 9. The collar 8 is integral with the nut. The collar has an extent along the whole circumference of the nut and may be provided with radial slits distributed in the nut's circumferential direction (not depicted). The advantage of having slits in the collar is to make it easier for it to shape itself about the shaft. The preloading nut and the collar are made of a steel which is softer than the shaft's keyed fastening 10 and threads 7, with the result that the collar can become deformed against these parts. The thickness adopted for the collar is such that it can become deformed against the shaft parts 7, 10. If the collar is made too thick, the force from the propeller shaft driver 3 or the sleeve 11 (see Figure 6) will not be enough to deform the collar, since the thicker the collar the greater the force required to change its shape. If the collar is made too thin, it will disintegrate during the deformation. In a heavy truck, the diameter of the pinion shaft is typically 60 mm, in which case a suitable thickness for the collar is 2.5 mm.

The collar 8 extends in the axial direction as far as is necessary for it to cover the end portion of the shaft's keyed fastening 10 and possibly also parts of the thread 7. Where a sleeve 11 according to the embodiment in Figure 6 is used, the locking by shape is only by the collar's cooperation with the thread 7, since the sleeve 11 is also screwed onto the pinion shaft 1 and is therefore situated between the collar 8 and the keyed fastening 10. A suitable length for the collar is 15-25 mm, preferably 20 mm, when the invention is employed on a heavy vehicle. The collar should be long enough to extend about 15 mm up on the shaft's keyed fastening 10. The thread 6 of the preloading nut 5 extends up over the collar 8. The conical inner surface of the propeller shaft driver 3 or of the sleeve 11 has to be at least as long as the preloading nut's collar 8.

Figures 5 and 8 depict an alternative embodiment of the preloading nut's collar 8 which in this case extends not only in over the keyed fastening 10 which fastens the propeller shaft driver 3 to the shaft 1 but also over part of the shaft thread 7. The result is locking by shape between the preloading nut and the shaft in both a substantially axial direction and a substantially circumferential direction.

The preloading nut 5 differs in height between Figures 7 and 8, but this is of no significance for the invention. The depictions in Figures 7 and 8 are merely schematic and their main purpose is to show that the collar extends in over only part of the keyed fastening 10 (Figure 7) or in over part of both the end portion of the keyed fastening and the opposite end portion of the shaft thread 7 (Figure 8). In the schematic depiction of the preloading nut 5 and the collar 8 in Figures 7 and 8 there is therefore a right angle at the transition between them. The transition might also have a radius to reduce the risk of crack initiation there.

The first step in assembling the pinion 101 is to fit the bearing configuration 4 on the pinion shaft 1. The preloading nut 5 is then screwed on until correct preloading force is reached. This is followed by fitted the propeller shaft driver 3 on the shaft by cooperation with the keyed fastening 10. Rotating the end nut 108 fitted on the shaft after the propeller shaft driver 3 causes the propeller shaft driver to move along the shaft towards the preloading nut 5. When the propeller shaft driver reaches the preloading nut, the nut's collar 8 will be accommodated in the internal cone 9 situated at the end of the propeller shaft driver. As the propeller shaft driver moves increasingly near to the preloading nut, the nut's collar 8 will be clamped between the propeller shaft driver and the shaft and thus be locked to the shaft by shape. In the embodiment depicted in Figure 4, the collar 8 extends substantially over the portion of the keyed fastening 10 which is nearest to the preloading nut 5 and is thus locked by shape to the keyed fastening. Figure 5 depicts an alternative embodiment of the preloading nut 5 in which the collar extends over parts of the keyed fastening and parts of the shaft thread 7 which hold the preloading nut in position. The correspondingly longer cone of the propeller shaft driver 3 will consequently lock the collar 8 by shape to both the keyed fastening 10 and the thread 7.

According to another embodiment depicted in Figure 6, a sleeve 11 with an internal cone is fitted on the shaft 1 before the propeller shaft driver 3. The sleeve has in its portion which points towards the propeller shaft driver an internal thread which cooperates with an outer thread on the shaft. When the sleeve is screwed towards the preloading nut 5, the collar 8 will be accommodated in the sleeve's internal cone, and as the sleeve is screwed nearer to the nut the collar will be pressed against, and locked by shape to, the shaft and its outer thread. When the sleeve has been screwed into position, the propeller shaft driver is fitted in a conventional way.

The fact that the preloading nut 5 is locked by shape to the pinion shaft 1 makes it possible for the propeller shaft driver to be removed later as necessary without affecting the preloading force. Another advantage achieved by the present invention is that the preloading nut makes it possible for the preloading force to be adjusted immediately when fitting the bearings instead of the previous situation of this only being possible after the pinion and the associated bearing configuration had been fitted, risking their having to be removed to rectify the preloading force.

The invention described above thus results in a device and a method which are quicker and easier to use than prior art for the preloading of bearings for a pinion shaft. The proposed solution also results in a central gear on which it is easier to carry out repairs and servicing.

The above description of the preferred embodiments of the present invention is provided for illustrative and descriptive purposes. It is not intended to be exhaustive nor to limit the invention to the variants described. Many modifications and variations will obviously suggest themselves to one skilled in the art. The embodiments were chosen and described in order best to explain the principles of the invention and its practical applications and thereby make it possible for one skilled in the art to understand the invention for various embodiments and with the various modifications appropriate to the intended purpose.

## Claims

1. A device for preloading a bearing configuration (4) for a pinion shaft (1), comprising
a pinion (101) with a shaft (1) which has gear teeth (2) at its one end and a keyed fastening (10) at its other end to accommodate a propeller shaft driver (3),
a bearing configuration (4) which comprises at least one bearing (41, 42) fitted in a bearing housing (43) and which supports the shaft (1),
**characterised in that** a preloading nut (5) which has a collar (8) extending towards the propeller shaft driver, and an internal thread (6) cooperating with an external thread (7) on the shaft (1), such that the collar (8) of the preloading nut (5) is pressed against, and thereby locked by shape to the shaft (1), wherein the end of the propeller shaft driver (3) which faces towards the bearing configuration (4) is internally conical (9) so that the collar (8) extends in under the propeller shaft driver (3) with the result that the propeller shaft driver (3) presses the collar (8) against the shaft (1).

2. A device according to claim 1, **characterised in that** the locking by shape is achieved by the collar (8) becoming deformed against the keyed fastening (10).

3. A device according to claim 2, **characterised in that** the locking by shape is achieved by the collar (8) becoming deformed against the keyed fastening (10) and the thread (7) on the shaft (1).

4. A method for preloading a bearing configuration (4) for a pinion shaft (1), comprising the steps of fitting a bearing configuration (4), which comprises at least one bearing (41, 42) situated in a bearing housing (4), on a shaft (1) which has at its first end gear teeth (2) and at its second end a keyed fastening (10) for accommodating a propeller shaft driver (3), **characterised in that** the method further comprises the step of fitting a preloading nut (5), which is provided with a collar (8), on the shaft (1) by means of cooperating threads (6,7) on the preloading nut (5) and the shaft (1), and thereby preloading the bearing (41, 42),
the collar (8) being pressed against, and thereby locked by shape to, the shaft (1), wherein the propeller shaft driver (3) is fitted on the shaft (1) in such a way that the collar (8) of the preloading nut (5) extends in under the propeller shaft driver (3), which on its side which faces towards the bearing configuration (4) is provided with an internal cone to accommodate the collar (8), and thereby the propeller shaft driver (3) press the preloading nut (5) against the shaft (1).

5. A method according to claim 4, **characterised in that** the collar (8) on the preloading nut (5) becomes deformed against the keyed fastening (10).

6. A method according to claim 5, **characterised in that** the collar (8) on the preloading nut (5) becomes deformed against the keyed fastening (10) and the thread (7) on the shaft (1).

7. A central gear (110) equipped with a device according to any one of claims 1-3.

8. A motor vehicle (100) equipped with a central gear according to claim 7.

## Patentansprüche

1. Vorrichtung zum Vorspannen einer Lageranordnung (4) für eine Ritzelwelle (1), umfassend
ein Ritzel (101) mit einer Welle (1), die an ihrer einen Seite Zahnradzähne (2) und an ihrer anderen Seite eine verzahnte Befestigung (10) aufweist, um einen Antriebswellenantreiber (3) aufzunehmen,
eine Lageranordnung (4), die wenigstens ein Lager (41, 42) umfasst, das in einem Lagergehäuse (43) angebracht ist, und welche die Welle (1) lagert,
**dadurch gekennzeichnet, dass**
eine Vorspannmutter (5), die einen Bund (8), der sich in Richtung des Kegelrads erstreckt, und ein innenliegendes Gewinde (6) aufweist, das mit einem außenliegenden Gewinde (7) auf der Welle (1) zusammenwirkt, sodass der Bund (8) der Vorspannmutter (5) gegen die Welle (1) gedrückt wird und dadurch formschlüssig mit ihr verbunden wird,
wobei das Ende des Antriebswellenantreibers (3), das in Richtung der Lageanordnung (4) orientiert ist, auf der Innenseite konisch (9) ist, sodass der Bund (8) sich unter dem Antriebswellenantreiber (3) derart erstreckt, dass der Antriebswellenantreiber (3) den Bund (8) gegen die Welle (1) drückt.

2. Vorrichtung nach Anspruch 1, **dadurch gekennzeichnet, dass** das formschlüssige Verbinden durch den Bund (8) erreicht wird, indem er gegen die verzahnte Befestigung (10) deformiert wird.

3. Vorrichtung nach Anspruch 2, **dadurch gekennzeichnet, dass** das formschlüssige Verbinden durch den Bund (8) erreicht wird, indem er gegen die verzahnte Befestigung (10) und das Gewinde (7) auf der Welle (1) deformiert wird.

4. Verfahren zum Vorspannen einer Lageranordnung (4) für eine Ritzelwelle (1), umfassend die Schritte
Anbringen einer Lageranordnung (4), die wenigstens ein Lager (41, 42) umfasst, das in einem Lagergehäuse (4) angeordnet ist, auf einer Welle (1), die an ihrem ersten Ende Zahnradzähne (2) und an ihrem zweiten Ende eine verzahnte Befestigung (10) aufweist, um eine Kegelrad (3) aufzunehmen,
**dadurch gekennzeichnet, dass** das Verfahren ferner die Schritte umfasst
Anbringen einer Vorspannmutter (5), die einen Bund (8) aufweist, auf der Welle (1) durch Zusammenwirken der Gewinde (6,7) auf der Vorspannmutter (5) und der Welle (1), und dabei Vorspannen des Lagers (41, 42),
Drücken des Bunds (8) gegen die Welle (1) und Verbinden mit ihr mittels Formschluss,
wobei der Antriebswellenantreiber (3) derart auf der Welle (1) angebracht wird, dass der Bund (8) der Vorspannmutter (5) sich unter dem Antriebswellenantreiber (3) erstreckt, das an dessen Seite, die in Richtung der Lageanordnung (4) orientiert ist, mit einem innenliegenden Konus ausgestattet ist, um den Bund (8) aufzunehmen, und dabei das Antriebswellenantreiber (3) die Vorspannmutter (5) gegen die Welle (1) drückt.

5. Verfahren nach Anspruch 4, **dadurch gekennzeichnet, dass** der Bund (8) auf der Vorspannmutter (5) gegen die verzahnte Befestigung (10) verformt wird.

6. Verfahren nach Anspruch 5, **dadurch gekennzeichnet, dass** der Bund (8) auf der Vorspannmutter (5) gegen die verzahnte Befestigung (10) und das Gewinde (7) auf der Welle (1) verformt wird.

7. Zentrales Getriebe (110), umfassend eine Vorrichtung nach einem der Ansprüche 1-3.

8. Kraftfahrzeug (100), umfassend ein zentrales Getriebe nach Anspruch 7.

## Revendications

1. Dispositif de précharge d'une configuration de roulement (4) pour un arbre de pignon (1), comprenant
un pignon (101) avec un arbre (1) qui présente à une extrémité des dents d'engrenage (2) et à l'autre extrémité une fixation à clé (10) pour recevoir un entraînement d'arbre de transmission (3), une configuration de roulement (4) qui comprend au moins un roulement (41, 42) monté dans un carter de roulement (43) et qui supporte l'arbre (1)
**caractérisé en ce que** :
un écrou de précharge (5) qui dispose d'un collier (8) s'étendant vers l'entraînement de l'arbre de transmission, et un filetage intérieur (6) coopérant avec un filetage extérieur (7) sur l'arbre (1), de sorte que le collier (8) de l'écrou de précharge (5) est serré contre, et par conséquent bloqué par forme sur l'arbre (1), dans lequel l'extrémité de l'entraînement de l'arbre de transmission (3) qui est tourné vers la configuration de roulement (4) est de forme conique à l'intérieur (9) de sorte que le collier (8) s'étend sous l'entraînement de l'arbre de transmission (3) de sorte que l'entraînement de l'arbre de transmission (3) presse le collier (8) contre l'arbre (1).

2. Dispositif selon la revendication 1, **caractérisé en ce que** le verrouillage par la forme est obtenu par déformation du collier (8) contre la fixation à clé (10).

3. Dispositif selon la revendication 2, **caractérisé en ce que** le verrouillage par la forme est obtenu par déformation du collier (8) contre la fixation à clé (10) et le filetage (7) sur l'arbre (1).

4. Procédé de précharge d'une configuration de roulement (4) pour un arbre de pignon (1), comprenant les étapes consistant à
monter une configuration de roulement (4), qui comprend au moins un roulement (41, 42) situé dans un carter de roulement (4), sur un arbre (1) qui présente à sa première extrémité des dents d'engrenage (2) et à sa seconde extrémité une fixation à clé (10) pour recevoir un entraînement de l'arbre de transmission (3), **caractérisé en ce que** le procédé comprend en outre les étapes consistant à
monter un écrou de précharge (5) muni d'un collier (8) sur l'arbre (1) au moyen de filetages qui coopèrent (6, 7) sur l'écrou de précharge (5) et l'arbre (1), et ainsi la précharge du roulement (41, 42),
le collier (8) étant pressé contre l'arbre (1) et ainsi bloqué par sa forme sur celui-ci,
dans lequel l'entraînement de l'arbre de propulsion (3) est monté sur l'arbre (1) de telle sorte que le collier (8) de l'écrou de précharge (5) s'étend sous l'entraînement de l'arbre de propulsion (3) qui, de son côté tourné vers la configuration de roulement (4) est pourvu d'un cône interne pour recevoir le collier (8), et ainsi l'entraînement de l'arbre de propulsion (3) presse sur l'arbre (1) l'écrou de précharge (5) contre celui-ci.

5. Procédé selon la revendication 4, **caractérisé en ce que** le collier (8) sur l'écrou de précharge (5) se déforme contre la fixation à clé (10).

6. Procédé selon la revendication 5, **caractérisé en ce que** le collier (8) sur l'écrou de précharge (5) se déforme contre la fixation à clé (10) et le filetage (7) sur l'arbre (1) .

7. Engrenage central (110) équipé d'un dispositif selon l'une quelconque des revendications 1-3.

8. Véhicule à moteur (100) équipé d'un engrenage central selon la revendication 7.
